# EUROPÄISCHE PATENTSCHRIFT

(11) **EP 3 448 740 B1**
(45) Veröffentlichungstag und Bekanntmachung des Hinweises auf die Patenterteilung: **18.03.2020**
(21) Anmeldenummer: 17722388.0
(22) Anmeldetag: 20.04.2017
(51) Int. Cl.: B62D 5/00

(54) **HANDS -ON/-OFF ERKENNUNG IN EINEM STEER-BY-WIRE SYSTEM**
HANDS-ON/OFF DETECTION IN A STEER-BY-WIRE SYSTEM
DÉTECTION MAINS SUR VOLANT/LIBRES DANS UN SYSTÈME DE DIRECTION À COMMANDE PAR CÂBLE

(30) Priorität: 26.04.2016 DE 102016005013
(43) Veröffentlichungstag der Anmeldung: 06.03.2019
(73) Patentinhaber: thyssenkrupp Presta AG, 9492 Eschen (LI); thyssenkrupp AG, 45143 Essen (DE)
(72) Erfinder: ROHRMOSER, Manuel, 6712 Thüringen (AT)
(74) Vertreter: thyssenkrupp Intellectual Property GmbH
(86) Internationale Anmeldenummer: PCT/EP2017/059382
(87) Internationale Veröffentlichungsnummer: WO 2017/186564

(56) Entgegenhaltungen:
- DE-A1-102007 039 332
- DE-A1-102009 028 647
- US-A1- 2014 371 989

## Beschreibung

Die vorliegende Erfindung betrifft ein Steer-by-Wire-Lenksystem für Kraftfahrzeuge.

In Steer-by-Wire-Lenksystemen ist die Stellung der gelenkten Räder nicht direkt mit dem Lenkrad gekoppelt. Es besteht eine Verbindung zwischen dem Lenkrad und den gelenkten Rädern über elektrische Signale. An Stelle der mechanischen Kopplung werden ein Radwinkelsteller zur Positionierung der Räder sowie ein Handkraftaktuator zur Simulation der Rückstellkräfte am Lenkrad verwendet.

Zur Erhöhung der Fahrsicherheit eines Kraftfahrzeugs im Straßenverkehr weisen moderne Kraftfahrzeuge eine zunehmende Anzahl von Fahrerassistenzsysteme auf, welche auf die Erhöhung der aktiven Sicherheit gerichtet sind. Neben Geschwindigkeitsregelungen und teilweise damit verknüpften Abstandsregelungen sind auch Spurhaltesysteme bekannt.

Für diese Systeme ist eine Lenkradüberwachung wichtig, die feststellt, ob eine Fahreraktivität am Lenkrad vorliegt oder nicht.

Dabei wird im Folgenden eine Situation, in der der Fahrer das Lenkrad ergriffen hat, als Hands-On-Situation, und eine Situation, in der der Fahrer das Lenkrad nicht ergriffen hat, also eine Freihandfahrt, als Hands-Off-Situation bezeichnet, was den in diesen technischen Bereichen verwendeten Begriffen entspricht.

US 2014 0371989 A1 beschreibt ein satzungsgemäßes Verfahren zum Detektieren eines Zustandes einer Hand-Lenkrad-Berührung, bei dem ein Testsignal erzeigt und eine Servolenkung mit einem Drehmomente gemäß dem Testsignal durch einen elektrischen Servomotor der Servolenkung beaufschlagt sowie das resultierende Lenkraddrehmomentsignal gemessen wird. Das Testsignal und das gemessene Lenkraddrehmomentsignal werden als Messgröße zu einem regelungstechnischen Beobachter zugeführt. Der Beobachter modelliert ein Lenkrad-Hand-System und modifiziert das modellierte Lenkrad-Hand-System anhand von Abweichungen zwischen den Messgrößen und dem modellierten Lenkrad-Hand-System für eine Reduktion der Abweichungen. Abschließend wird eine Statusvariable des modellierten Lenkrad-Hand-Systems ausgelesen, wobei die Statusvariable eine Aussage über den Zustand der Hand-Lenkrad-Berührung enthält.

Aus DE 10 2009 028 647 B3 ist eine Hands-On/Off-Erkennung eines elektrisch unterstützten Lenksystems bekannt. Die Erkennung der Fahreraktivität am Lenkrad erfolgt mittels eines Testsignals. Hierbei generiert ein Beobachter aus dem Testsignal und dem Drehmoment des Lenkrads ein Modell.

Die DE 10 2010 019 236 B3 offenbart ebenfalls ein Verfahren zum Messen einer Handberührung eines Steuers eines Hubschraubers. Dabei wird anhand von Bewegungssignalen des Steuers ein Frequenzspektrum ermittelt, wodurch erkannt werden kann, ob der Fahrer mit dem Steuer in Kontakt steht. Zusätzlich werden in der Umgebung des Steuers Vibrationen erfasst. Das Frequenzspektrum bei ungegriffenem Steuer unterscheidet sich dabei vom Frequenzspektrum eines berührten Steuers. Diese Verfahren haben jedoch den Nachteil, dass sie nicht stets die gewünschte Genauigkeit aufweisen.

Aus DE 10 2007 039 332 A1 ist ein weiteres Verfahren und Lenkassistenzsystem zur Detektion eines Kontaktzustands einer Hand eines Fahrers an der Lenkhandhabe eines Fahrzeugs bekannt.

Es ist Aufgabe der vorliegenden Erfindung, ein Steer-by-Wire-Lenksystem für Kraftfahrzeuge mit genauer, ausreichend schneller und stets zuverlässig arbeitender Lenkradüberwachung anzugeben.

Diese Aufgabe wird von einem Steer-by-Wire-Lenksystem mit den Merkmalen des Anspruchs 1 und einem Verfahren zur Bestimmung eines Kontaktzustandes mit den Merkmalen des Anspruchs 5 gelöst. In den Unteransprüchen sind vorteilhafte Weiterbildungen der Erfindung genannt.

Demnach ist ein Steer-by-Wire-Lenksystem für Kraftfahrzeuge mit einem auf die gelenkten Räder wirkenden, in Abhängigkeit eines Fahrerlenkwunsches elektronisch geregelten Lenksteller, mit einem Rückwirkungen der Straße auf ein Lenkrad übertragenden Feedback-Aktuator, und einer Steuereinheit, die den Feedback-Aktuator und den Lenksteller ansteuert, vorgesehen, wobei die Steuereinheit einen Schätzer umfassend einen Beobachter und ein Modell des Feedback-Aktuators aufweist, wobei der Schätzer dazu eingerichtet ist, basierend auf Messwerten des Feedback-Aktuators und mithilfe des Modells und des Beobachters ein Fahrerlenkmoment zu schätzen und als Ergebnis bereitzustellen, und wobei die Steuereinheit weiterhin eine Filtereinheit umfasst, die dazu eingerichtet ist, die Messwerte des Feedback-Aktuators durch Bestimmung der Dämpfung von Amplituden vorgegebener Frequenzbereiche zu analysieren und das Ergebnis bereitzustellen, zudem weist die Steuereinheit weiterhin eine Entscheidungseinheit auf, die derart aufgebaut ist, anhand der Ergebnisse der Filtereinheit und des Schätzers zu entscheiden, ob eine Handberührung des Fahrers am Lenkrad vorliegt oder nicht.

Dadurch, dass neben einem Schätzer auch durch Analyse des Frequenzspektrums der Kontaktzustand überprüft wird, arbeitet die Lenkradüberwachung des erfindungsgemäßen Lenksystems schnell und stets zuverlässig.

Vorzugsweise umfasst die Filtereinheit einen Goertzel-Algorithmus um nur Teile des Frequenzspektrums zu analysieren.

Der Beobachter ist bevorzugt ein Kalman Filter oder bei nicht-linearen Systemen ein "Extended Kalman Filter".

In einer bevorzugten Ausführungsform ist vorgesehen, dass die Entscheidungseinheit weiterhin derart aufgebaut ist, dass sie im Falle einer nicht hinreichenden Genauigkeit der Bestimmung des Dämpfungsgrades ein Testsignal an den Feedback-Aktuator schicken kann, wobei ausgehend von dem Testsignal mit Hilfe der Filtereinheit und des Schätzers die Entscheidungseinheit zuverlässig entscheiden kann, ob eine Handberührung des Fahrers am Lenkrad vorliegt oder nicht. Der Termin "Hinreichend Genau" bezieht sich dabei auf das gemessene Frequenzspektrum und ob genügend Vibrationen vorliegen mit deren Hilfe, eine eventuell vorliegende Dämpfung von Amplituden in vordefinierten Frequenzbereichen bestimmt werden kann. Zum Beispiel im Zuge eines automatischen Einparkvorgangs ist beim Stillstand des Kraftfahrzeugs zu erwarten, dass die Vibrationen am Lenkrad zu klein sind. Es ist daher ein Testsignal notwendig, um sicher und zuverlässig zu entscheiden, ob der Fahrer seine Hände am Lenkrad hat oder nicht. Vorzugsweise ist das eingeleitete Testsignal nicht durch den Fahrer am Lenkrad wahrnehmbar.

Weiterhin ist ein entsprechendes Verfahren zur Bestimmung eines Kontaktzustandes zwischen mindestens einem Fahrer eines Kraftfahrzeuges mit einem Steer-by-Wire-Lenksystem und einem Lenkrad des Steer-by-Wire-Lenksystems vorgesehen, wobei das Steer-by-Wire-Lenksystem einen in Abhängigkeit eines Fahrerlenkwunsches elektronisch geregelten Lenksteller, einen Rückwirkungen der Straße auf das Steuer übertragenden Feedback-Aktuator, und eine Steuereinheit, die den Feedback-Aktuator und den Lenksteller ansteuert, aufweist, und das Verfahren folgende Schritte umfasst:
a) Ermitteln eines Frequenzspektrums von Bewegungssignalen, die von Sensoren des Feedback-Aktuators erfasst werden,
b) Analyse des Frequenzspektrums mit Bestimmung der Dämpfung von Amplituden vorgegebener Frequenzbereiche,
c) Schätzen eines Fahrerlenkmoments mittels eines geeigneten Beobachters des Feedback-Aktuators, eines Modells des Feedback-Aktuators und der Bewegungssignale.

Vorzugsweise ist ein Verfahrensschritt d) vorgesehen, der falls die Analyse des Frequenzspektrums eine hinreichende Genauigkeit aufweist, Bestimmung des Kontaktzustandes durch Analyse des geschätzten Fahrerlenkmoments, des Frequenzspektrums und der Dämpfung der Amplituden der vorgegebenen Frequenzbereiche, umfasst. Und weiterhin bevorzugt, im Falle einer nicht hinreichenden Genauigkeit der Analyse des Frequenzspektrums, die Schritte
- Aussetzen der Entscheidung ob ein Kontakt vorliegt,
- Ausgabe eines Testsignals an den Feedback-Aktuator, umfasst. Worauf nach dem Erzeugen des Testsignals, das Verfahren zur Analyse des Testsignals gemäß den Verfahrensschritten a)-d) durchgeführt wird.

Vorzugsweise erfolgt die Analyse des Frequenzspektrums in Schritt b) durch einen Vergleich zwischen dem ermittelten Frequenzspektrum und einem hinterlegten Referenz-Frequenzspektrum.

In einer bevorzugten Ausführungsform wird das in Schritt b) ermittelte Frequenzspektrum gefiltert und die Analyse des Frequenzspektrums in Abhängigkeit des gefilterten Frequenzbereichs des Frequenzspektrums durchgeführt.

Wie bereits oben dargestellt, erfolgt das Filtern bevorzugt durch einen Goertzel-Algorithmus.

Vorteilhafterweise ist der Beobachter ein "Extended Kalman Filter".

Bei dem Verfahren ist es von Vorteil, wenn das Modell des Feedback-Aktuators die Trägheit, Dämpfung/Reibung, Steifigkeit, Ungleichförmigkeit und/oder Totzeit des Systems beinhaltet.

In einer bevorzugten Ausführungsform umfassen die Bewegungssignale einen von dem Feedback-Aktuator gemessenen Lenkwinkel und ein von dem Feedback-Aktuator gemessenes Drehmoment.

Bevorzugte Ausführungsformen der Erfindung werden nachfolgend anhand der Zeichnungen näher erläutert. Gleichartige oder gleichwirkende Bauteile werden in den Figuren mit denselben Bezugszeichen bezeichnet. Es zeigen:
- Fig. 1:: eine schematische Darstellung eines Steer-by-Wire-Lenksystems,
- Fig. 2:: ein Blockdiagramm einer Steuerung des Steer-by-Wire-Lenksystems, sowie
- Fig. 3:: ein Blockdiagramm mit Steuereinheit und Feedback-Aktuator.

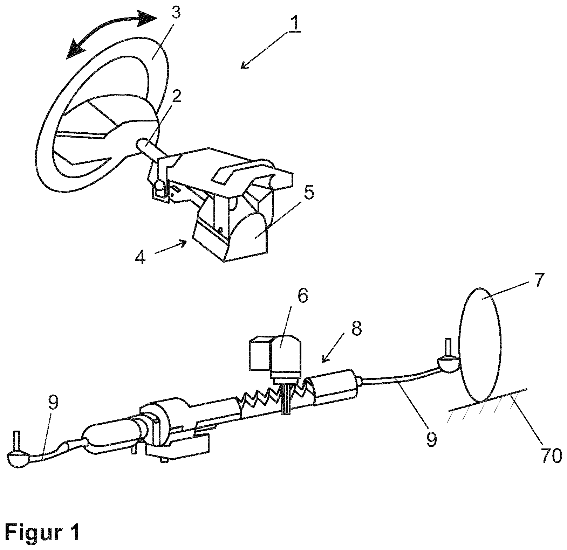

In der Figur 1 ist eine Steer-by-Wire-Lenkung 1 gezeigt. An einer Lenkwelle 2 ist ein nicht dargestellter Drehwinkelsensor angebracht, welcher das durch Drehen des Lenkrads 3 aufgebrachte Fahrerlenkmoment erfasst. Des Weiteren ist an der Lenkwelle 2 ein Feedback-Aktuator 4 angebracht, welcher dazu dient, die Rückwirkungen von der Fahrbahn 70 auf das Lenkrad 3 zu übertragen und somit dem Fahrer eine Rückmeldung über das Lenk- und Fahrverhalten des Fahrzeugs zu geben. Der Fahrerlenkwunsch wird über den vom Drehwinkelsensor gemessenen Drehwinkel der Lenkwelle 2 über Signalleitungen an eine Steuereinheit 5 übertragen. Die Steuereinheit 5 steuert in Abhängigkeit des Signals vom Drehwinkelsensor sowie weiteren Eingangsgrößen, wie z. B. Fahrzeuggeschwindigkeit, Gierrate und dergleichen einen elektrischen Lenksteller 6 an, welcher die Stellung der gelenkten Räder 7 steuert. Der Lenksteller 6 wirkt über ein Lenkgetriebe 8 sowie Spurstangen 9 und anderen Bauteilen mittelbar auf die gelenkten Räder 7.

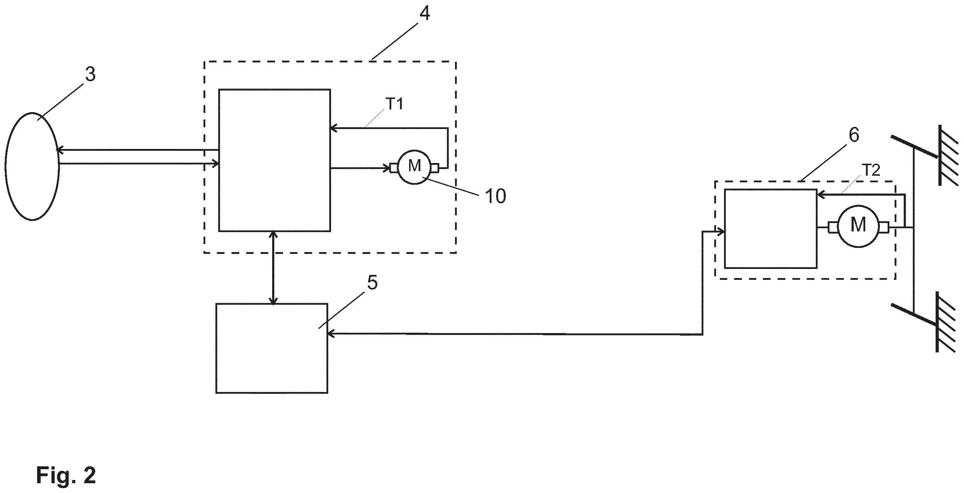

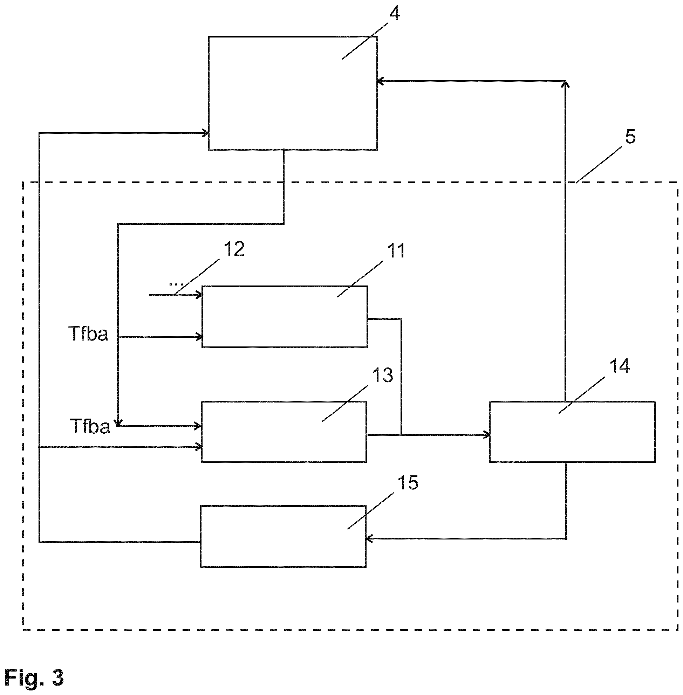

Figur 2 zeigt den Zusammenhang zwischen Feedback-Aktuator 4, Steuereinheit 5 und Lenksteller 6. Der Feedback-Aktuator 4 weist den Drehwinkelsensor, einen Drehmomentsensor und einen Motor 10 auf. Der Feedback-Aktuator 4 kommuniziert mit der Steuereinheit 5, die einen Schätzer 11 aufweist. Wie in Figur 3 dargestellt ist, empfängt der Schätzer 11 Signale vom Feedback-Aktuator 4, die ein am Feedback-Aktuator 4 anliegenden Lenkwinkel und ein Drehmoment repräsentieren.

Der vom Feedback-Aktuator 4 mittels des Drehwinkelsensors gemessene Lenkwinkel und das mittels des Drehmomentsensors gemessene Drehmoment stellen somit die Eingangsgrößen für den Schätzer 11 dar.

Der Schätzer schätzt aus diesen Messwerten ein Lenkmoment des Fahrers bzw. ein Fahrerlenkmoment; das Moment, welches der Fahrer auf das Lenkrad aufbringt. Dazu verwendet der Schätzer ein Modell 12 des Feedback-Aktuators 5 und einen Kalman-Filter, als Beobachter.

Als Input für das Zustands-Modell 12 des Feedback-Aktuators 4 werden unter anderem folgende physikalische Eigenschaften berücksichtigt: die Trägheit, Dämpfung/Reibung, Steifigkeit, Ungleichförmigkeit und Totzeit des Systems.

Das Konzept eines Kalmanfilters betrifft ein Verfahren zum Schätzen der zeitlichen Entwicklung linearer Systeme, mittels welchem Störungen von einem Messsignal entfernt werden können. Das Filter benötigt hierzu ein Modell des zu schätzenden Systems.

Bevorzugt werden nichtlineare Zusammenhänge berücksichtigt, so dass der Schätzer auf einem Extended-Kalman-Filter und einem nicht-linearen Modell des Feedbackaktuators basiert.

Zusätzlich zu dem geschätzten Fahrerlenkmoment werden aus dem vom Feedback-Aktuator gemessenen Lenkwinkel und Drehmoment mittels eines Filters 13 die Dämpfung von Amplituden vorbestimmter Frequenzbereiche bestimmt.

Umfasst der Fahrer das Lenkrad 3, so werden aufgrund des neuen mechanischen Gesamtsystems und der veränderten Dämpfungseigenschaften Vibrationen zum Teil geschluckt. Die Frequenzspektren des ungegriffenen Lenkrads unterscheiden sich charakteristisch von denen des gegriffenen Lenkrads. Der Unterschied zwischen Hands-on und Hands-off Zustand ist somit im Frequenzspektrum der gemessenen Sensorsignale des Feedbackaktuators 4 sichtbar.

Dabei ist es vorteilhaft, wenn nur bestimmte Frequenzbereiche verwendet werden. So ist beispielsweise bekannt, dass in höheren Frequenzbereichen charakteristische Vibrationen erkennbar sind, die sich aus Vibrationen aus der Umgebung des Lenkrads zusammensetzen. Wird nun das Lenkrad gegriffen, so verändern sich diese Frequenzbereiche entsprechend, was dann detektierbar ist.

Vorzugsweise analysiert ein Goertzel-Algorithmus nur bestimmte Frequenzbereiche, anhand deren eine Lenkradüberwachung vollzogen wird.

Es liegen somit zwei nahezu unabhängig voneinander getroffene Einschätzungen vor, die in einem finalen Auswerteschritt einer Entscheidungseinheit 14 miteinander verknüpft werden, um zuverlässig zu bestimmen, ob am Lenkrad eine Handberührung bzw. ein Fahrerlenkmoment anliegt oder nicht.

Falls die im Fahrbetrieb auftretenden Vibrationen für die Bestimmung der Dämpfungen der Amplituden in den vorbestimmten Frequenzbereichen nicht ausreichen, wird zusätzlich ein Testsignal 15 in einer bestimmten Intensität und Amplitude mittels des Feedback-Motors 10 in den Feedback-Aktuator 4 eingeleitet und eine symmetrische Schwingung am Lenkrad 3 erzeugt. Daraufhin wird wiederrum anhand des geschätzten Fahrerlenkmoments und mittels Frequenzanalyse des Goertzel-Filters eine Beeinflussung des Feedback-Aktuators 4 durch eine Berührung des Lenkrads 3 erkannt und damit der aktuelle Bedienzustand (Hands-On/-Off) bestimmt.

Befindet sich das Fahrzeug in einer Kurvenfahrt und wird eine Hands-off Situation am Lenkrad 3 ermittelt, kann es notwendig sein, das Lenkrad 3 in die neutrale Position zurück zu bewegen, um eine Geradeausfahrt zu ermöglichen. Bei der Rückstellung des Lenkrads 3 in die neutrale Position wird das am Lenkrad 3 anliegende Lenkgefühl angepasst. Unter "angepasst" ist zu verstehen, dass über eine höhere einstellbare Reibung bzw. Dämpfung in Abhängigkeit der Fahrzeug-und Lenkwinkelgeschwindigkeit und der Lenkrichtung eine gleichmäßige Rückstellung ermöglicht wird und dem Fahrer damit ein möglichst natürliches Lenkgefühl bei erneuter Hands-On Situation bereitgestellt wird.

## Patentansprüche

1. Steer-by-Wire-Lenksystem (1) für Kraftfahrzeuge mit einem auf die gelenkten Räder (7) wirkenden, in Abhängigkeit eines Fahrerlenkwunsches elektronisch geregelten Lenksteller (6), mit einem Rückwirkungen der Straße (70) auf ein Steuer übertragenden Feedback-Aktuator (4), und einer Steuereinheit (5), die den Feedback-Aktuator (4) und den Lenksteller (6) ansteuert, wobei die Steuereinheit (5) einen Schätzer (11) umfassend einen Beobachter und ein Modell (12) des Feedback-Aktuators (4) aufweist, wobei der Schätzer (11) dazu eingerichtet ist, basierend auf Messwerten des Feedback-Aktuators (4) und mithilfe des Modells (12) und des Beobachters ein Fahrerlenkmoment zu schätzen und als Ergebnis bereitzustellen,
die Steuereinheit (5) weiterhin eine Filtereinheit (13) umfasst, die dazu eingerichtet ist, die Messwerte des Feedback-Aktuators (4) durch Bestimmung der Dämpfung von Amplituden vorgegebener Frequenzbereiche zu analysieren und das Ergebnis bereitzustellen,
und wobei die Steuereinheit (5) weiterhin eine Entscheidungseinheit (14) aufweist, die derart aufgebaut ist, anhand der Ergebnisse der Filtereinheit (13) und des Schätzers (11) zu entscheiden, ob eine Handberührung des Fahrers an einem Lenkrad (3) vorliegt oder nicht.

2. Steer-by-Wire-Lenksystem nach Anspruch 1, **dadurch gekennzeichnet, dass** die Filtereinheit (13) einen Goertzel-Algorithmus umfasst.

3. Steer-by-Wire-Lenksystem nach Anspruch 1 oder 2, **dadurch gekennzeichnet, dass** der Beobachter ein Extended Kalman Filter ist.

4. Steer-by-Wire-Lenksystem nach einem der vorhergehenden Ansprüche, **dadurch gekennzeichnet, dass** die Entscheidungseinheit (14) weiterhin derart aufgebaut ist, dass sie im Falle einer nicht hinreichenden Genauigkeit der Bestimmung der Dämpfung in der Filtereinheit (13) ein Testsignal (15) an den Feedback-Aktuator (4) schicken kann, wobei anhand des Testsignals die Entscheidungseinheit (14) mit Hilfe der Filtereinheit (13) und dem Schätzer (11) zuverlässig entscheiden kann, ob eine Handberührung des Fahrers am Lenkrad (3) vorliegt oder nicht.

5. Verfahren zur Bestimmung eines Kontaktzustandes zwischen mindestens einem Fahrer eines Kraftfahrzeuges mit einem Steer-by-Wire-Lenksystem (1) und einem Lenkrad (3) des Steer-by-Wire-Lenksystems, wobei das Steer-by-Wire-Lenksystem einen in Abhängigkeit eines Fahrerlenkwunsches elektronisch geregelten Lenksteller (6), einen Rückwirkungen der Straße (70) auf das Lenkrad (3) übertragenden Feedback-Aktuator (4), und eine Steuereinheit (4), die den Feedback-Aktuator (4) und den Lenksteller (6) ansteuert, aufweist, wobei das Verfahren folgende Schritte umfasst:
a) Ermitteln eines Frequenzspektrums von Bewegungssignalen, die von Sensoren des Feedback-Aktuators (4) erfasst werden,
b) Analyse des Frequenzspektrums mit Bestimmung der Dämpfung von Amplituden vorgegebener Frequenzbereiche,
c) Schätzen eines Fahrerlenkmoments mittels eines geeigneten Beobachters des Feedback-Aktuators, eines Modells (12) des Feedback-Aktuators (4) und der Bewegungssignale.

6. Verfahren nach Anspruch 5, **dadurch gekennzeichnet, dass** das Verfahren weiterhin folgende Schritte aufweist:
d) Falls die Analyse des Frequenzspektrums eine hinreichende Genauigkeit aufweist, Bestimmung des Kontaktzustandes durch Analyse des geschätzten Fahrerlenkmoments, des Frequenzspektrums und der Dämpfung der Amplituden der vorgegebenen Frequenzbereiche.

7. Verfahren nach Anspruch 6, **dadurch gekennzeichnet, dass** der Verfahrensschritt d) zusätzlich folgende Schritte umfasst:
im Falle einer nicht hinreichenden Genauigkeit der Analyse des Frequenzspektrums
- Aussetzen der Entscheidung ob ein Kontakt vorliegt,
- Ausgabe eines Testsignals (15) an den Feedback-Aktuator (4),
und darauf hin das Verfahren zur Analyse des Testsignals gemäß den Verfahrensschritten a)-d) durchgeführt wird.

8. Verfahren nach einem der Ansprüche 5 bis 7, **dadurch gekennzeichnet, dass** die Analyse des Frequenzspektrums in Schritt b) durch Vergleich zwischen dem ermittelten Frequenzspektrum und einem hinterlegten Referenz-Frequenzspektrums erfolgt.

9. Verfahren nach einem der Ansprüche 5 bis 8, **dadurch gekennzeichnet, dass** in Schritt b) das ermittelte Frequenzspektrum gefiltert wird und die Analyse des Frequenzspektrums in Abhängigkeit des gefilterten Frequenzbereichs des Frequenzspektrums erfolgt.

10. Verfahren nach Anspruch 9, **dadurch gekennzeichnet, dass** das Filtern einen Goertzel-Algorithmus umfasst.

11. Verfahren nach einem der Ansprüche 5 bis 10, **dadurch gekennzeichnet, dass** der Beobachter ein "Extended Kalman Filter" ist.

12. Verfahren nach einem der Ansprüche 5 bis 11, **dadurch gekennzeichnet, dass** das Modell (12) des Feedback-Aktuators (4) die Trägheit, Dämpfung/Reibung, Steifigkeit, Ungleichförmigkeit und/oder Totzeit des Systems beinhaltet.

13. Verfahren nach einem der Ansprüche 5 bis 12, **dadurch gekennzeichnet, dass** die Bewegungssignale einen von dem Feedback-Aktuator (4) gemessenen Drehwinkel der Lenkwelle (2) und ein von dem Feedback-Aktuator (4) gemessenes Drehmoment umfassen.

## Claims

1. Steer-by-wire steering system (1) for motor vehicles with a steering actuator (6) acting on the steered wheels (7) that is electronically controlled depending on a driver's steering demand, with a feedback actuator (4) transmitting feedback effects of the road (70) to a steering wheel, and a control unit (5) that actuates the feedback actuator (4) and the steering actuator (6), wherein the control unit (5) comprises an estimator (11) comprising an observer and a model (12) of the feedback actuator (4), wherein the estimator (11) is configured to estimate a driver's steering torque based on measurement values of the feedback actuator (4) and using the model (12) and the observer and to provide said driver's steering torque as a result,
the control unit (5) further comprises a filter unit (13) that is arranged to analyze the measurement values of the feedback actuator (4) by determining the damping of amplitudes of predetermined frequency ranges and to provide the result,
and wherein the control unit (5) further comprises a decision unit (14) that is designed to decide whether there is driver's hand contact on a steering wheel (3) or not by using the results of the filter unit (13) and the estimator (11).

2. Steer-by-wire steering system according to Claim 1, **characterized in that** the filter unit (13) comprises a Goertzel algorithm.

3. Steer-by-wire steering system according to Claim 1 or 2, **characterized in that** the observer is an extended Kalman filter.

4. Steer-by-wire steering system according to any one of the preceding claims, **characterized in that** furthermore the decision unit (14) is designed such that in the case of insufficient accuracy of the determination of the damping in the filter unit (13), the decision unit (14) can send a test signal (15) to the feedback actuator (4), wherein using the test signal the decision unit (14) can reliably decide whether there is driver's hand contact on the steering wheel (3) or not by using the filter unit (13) and the estimator (11).

5. Method for determining a contact state between at least one driver of a motor vehicle with a steer-by-wire steering system (1) and a steering wheel (3) of the steer-by-wire steering system, wherein the steer-by-wire steering system comprises a steering actuator (6) that is electronically controlled depending on a driver's steering demand, a feedback actuator (4) transmitting feedback effects of the road (70) to the steering wheel (3), and a control unit (5) that actuates the feedback actuator (4) and the steering actuator (6), wherein the method comprises the following steps:
a) determining a frequency spectrum of movement signals detected by sensors of the feedback actuator (4),
b) analysis of the frequency spectrum with determination of the damping of amplitudes of predetermined frequency ranges,
c) estimating a driver's steering torque by means of a suitable observer of the feedback actuator, a model (12) of the feedback actuator (4) and the movement signals.

6. Method according to Claim 5, **characterized in that** the method furthermore comprises the following steps:
d) if the analysis of the frequency spectrum is sufficiently accurate, determining the contact state by analysis of the estimated driver's steering torque, the frequency spectrum and the damping of the amplitudes of the predetermined frequency ranges.

7. Method according to Claim 6, **characterized in that** the step d) of the method additionally comprises the following steps:
in the case of insufficiently accurate analysis of the frequency spectrum
- suspending deciding whether there is a contact,
- outputting a test signal (15) to the feedback actuator (4),
and thereupon the method for analyzing the test signal is carried out according to the steps of the method a)-d).

8. Method according to any one of Claims 5 through 7, **characterized in that** the analysis of the frequency spectrum in step b) is carried out by comparing the determined frequency spectrum and a stored reference frequency spectrum.

9. Method according to any one of Claims 5 through 8, **characterized in that** in step b) the determined frequency spectrum is filtered, and the analysis of the frequency spectrum is carried out depending on the filtered frequency range of the frequency spectrum.

10. Method according to Claim 9, **characterized in that** the filtering comprises a Goertzel algorithm.

11. Method according to any one of Claims 5 through 10, **characterized in that** the observer is an "extended Kalman filter".

12. Method according to any one of Claims 5 through 11, **characterized in that** the model (12) of the feedback actuator (4) contains the inertia, damping/friction, stiffness, non-uniformity and/or dead time of the system.

13. Method according to any one of Claims 5 through 12, **characterized in that** the movement signals comprise an angle of rotation of the steering shaft (2) that is measured by the feedback actuator (4) and a torque that is measured by the feedback actuator (4) .

## Revendications

1. Système de direction à commande électrique (1) pour véhicules automobiles, comprenant un organe final de direction (6) à régulation électronique agissant sur les roues directrices (7) en fonction d'un souhait de direction du conducteur, comprenant un actionneur à contre-réaction (4) qui transmet des contre-réactions de la route (70) sur un volant, et une unité de commande (5) qui commande l'actionneur à contre-réaction (4) et l'organe final de direction (6), l'unité de commande (5) possédant un estimateur (11) qui comprend un observateur et un modèle (12) de l'actionneur à contre-réaction (4), l'estimateur (11) étant conçu pour, en se basant sur les valeurs mesurées de l'actionneur à contre-réaction (4) et à l'aide du modèle (12) et de l'observateur, estimer un couple de direction du conducteur et le fournir en tant que résultat,
l'unité de commande (5) comprenant en outre une unité de filtrage (13) qui est conçue pour analyser les valeurs mesurées de l'actionneur à contre-réaction (4) en déterminant l'atténuation des amplitudes de plages de fréquences prédéfinies et fournir le résultat,
et l'unité de commande (5) possédant en outre une unité de décision (14) qui est construite pour, à l'aide des résultats de l'unité de filtrage (13) et de l'estimateur (11), décider s'il existe ou non un contact de la main du conducteur sur un volant de direction (3).

2. Système de direction à commande électrique selon la revendication 1, **caractérisé en ce que** l'unité de filtrage (13) comprend un algorithme de Goertzel.

3. Système de direction à commande électrique selon la revendication 1 ou 2, **caractérisé en ce que** l'observateur est un filtre de Kalman étendu.

4. Système de direction à commande électrique selon l'une des revendications précédentes, **caractérisé en ce que** l'unité de décision (14) est en outre construite de telle sorte que dans le cas d'une précision insuffisante de la détermination de l'atténuation dans l'unité de filtrage (13), elle peut envoyer un signal de test (15) à l'actionneur à contre-réaction (4), l'unité de décision (14) pouvant, à l'aide de l'unité de filtrage (13) et de l'estimateur (11), décider avec fiabilité s'il existe ou non un contact de la main du conducteur sur le volant de direction (3).

5. Procédé de détermination d'un état de contact entre au moins un conducteur d'un véhicule automobile comprenant un système de direction à commande électrique (1) et un volant de direction (3) du système de direction à commande électrique, le système de direction à commande électrique comprenant un organe final de direction (6) à régulation électronique en fonction d'un souhait de direction du conducteur, un actionneur à contre-réaction (4) qui transmet les contre-réactions de la route (70) sur le volant de direction (3), et une unité de commande (4) qui commande l'actionneur à contre-réaction (4) et l'organe final de direction (6), le procédé comprenant les étapes suivantes :
a) identification d'un spectre de fréquences de signaux de mouvement qui sont captés par des capteurs de l'actionneur à contre-réaction (4),
b) analyse du spectre de fréquences avec détermination de l'atténuation des amplitudes de plages de fréquences prédéfinies,
c) estimation d'un couple de direction du conducteur au moyen d'un observateur approprié de l'actionneur à contre-réaction, d'un modèle (12) de l'actionneur à contre-réaction (4) et des signaux de mouvement.

6. Procédé selon la revendication 5, **caractérisé en ce que** le procédé comprend en outre les étapes suivantes :
d) dans le cas où l'analyse du spectre de fréquences présente une précision suffisante, détermination de l'état de contact par analyse du couple de direction du conducteur estimé, du spectre de fréquences et de l'atténuation des amplitudes des plages de fréquences prédéfinies.

7. Procédé selon la revendication 6, **caractérisé en ce que** l'étape d) comprend en outre les étapes suivantes :
dans le cas d'une précision insuffisante de l'analyse du spectre de fréquences
- suspension de la décision de la présence d'un contact,
- délivrance d'un signal de test (15) à l'actionneur à contre-réaction (4),
et ensuite le procédé selon les étapes a) à d) est mis en œuvre pour analyser le signal de test.

8. Procédé selon l'une des revendications 5 à 7, **caractérisé en ce que** l'analyse du spectre de fréquences à l'étape b) est effectuée par comparaison entre le spectre de fréquences identifié et un spectre de fréquences de référence enregistré.

9. Procédé selon l'une des revendications 5 à 8, **caractérisé en ce qu'**à l'étape b), le spectre de fréquences identifié est filtré et l'analyse du spectre de fréquences est effectuée en fonction de la plage de fréquences filtrée du spectre de fréquences.

10. Procédé selon la revendication 9, **caractérisé en ce que** le filtrage comprend un algorithme de Goertzel.

11. Procédé selon l'une des revendications 5 à 10, **caractérisé en ce que** l'observateur est un « filtre de Kalman étendu ».

12. Procédé selon l'une des revendications 5 à 11, **caractérisé en ce que** le modèle (12) de l'actionneur à contre-réaction (4) contient l'inertie, l'atténuation/la friction, la rigidité, l'irrégularité et/ou le temps mort du système.

13. Procédé selon l'une des revendications 5 à 12, **caractérisé en ce que** les signaux de mouvement comprennent un angle de rotation de l'arbre rotatif (2) mesuré par l'actionneur à contre-réaction (4) et un couple mesuré par l'actionneur à contre-réaction (4).
